# EUROPEAN PATENT SPECIFICATION

(11) **EP 1 964 309 B1**
(45) Date of publication and mention of the grant of the patent: **23.07.2014**
(21) Application number: 06845202.8
(22) Date of filing: 12.12.2006
(51) Int. Cl.: H04L 12/10

(54) **PROVIDING DETAILED INFORMATION ON POWERED DEVICE IN SYSTEM FOR SUPPLYING POWER OVER COMMUNICATION LINK**
BEREITSTELLUNG VON DETAILLIERTEN INFORMATIONEN EINES GESPEISTEN GERÄTS IN EINEM SYSTEM ZUR STROMVERSORGUNG ÜBER EINE KOMMUNIKATIONSVERBINDUNG
PROCEDE POUR FOURNIR DES INFORMATIONS DETAILLEES SUR UN DISPOSITIF ALIMENTE DANS UN SYSTEME PERMETTANT DE FOURNIR UNE ALIMENTATION SUR UNE LIAISON DE COMMUNICATION

(30) Priority: 12.12.2005 US 749048 P
(43) Date of publication of application: 03.09.2008
(73) Proprietor: Linear Technology Corporation, Milpitas, CA 95035-7417 (US)
(72) Inventor: STANFORD, Clayton, Reynolds, Santa Barbara, CA 93102-0658 (US)
(74) Representative: Müller-Boré & Partner Patentanwälte PartG mbB
(86) International application number: PCT/US2006/047218
(87) International publication number: WO 2007/070473

(56) References cited:
- US-A1- 2004 164 619
- US-B1- 6 473 608
- "Power over Ethernet: Cisco Inline Power and IEEE 802.3af" INTERNET CITATION, [Online] 2004, XP002383688 Retrieved from the Internet: URL:http://www.cisco.com/warp/public/cc/so /neso/bbssp/poeie_wp.pdf> [retrieved on 2006-05-31]

## Description

### Technical Field

This disclosure relates to power supply systems, and more particularly, to circuitry and methodology for providing information relating to a powered device coupled to a communication link, such as an Ethernet link.

### Background Art

Over the years, Ethernet has become the most commonly used method for local area networking. The IEEE 802.3 group, the originator of the Ethernet standard, has developed an extension to the standard, known as IEEE 802.3af, that defines supplying power over Ethernet cabling. The IEEE 802.3af standard defines a Power over Ethernet (PoE) system that involves delivering power over unshielded twisted-pair wiring from a Power Sourcing Equipment (PSE) to a Powered Device (PD) located at opposite sides of a link. Traditionally, network devices such as IP phones, wireless LAN access points, personal computers and Web cameras have required two connections: one to a LAN and another to a power supply system. The PoE system eliminates the need for additional outlets and wiring to supply power to network devices. Instead, power is supplied over Ethernet cabling used for data transmission.

As defined in the IEEE 802.3af standard, PSE and PD are non-data entities allowing network devices to supply and draw power using the same generic cabling as is used for data transmission. A PSE is the equipment electrically specified at the point of the physical connection to the cabling, that provides the power to a link. A PSE is typically associated with an Ethernet switch, router, hub or other network switching equipment or midspan device.

PD is a device that is either drawing power or requesting power. Among examples of PDs are such devices as digital IP telephone, wireless network access points, PDA or notebook computer docking stations, cell phone chargers; HVAC thermostats, factory automation equipment, ID scanners, security systems, credit card terminals, and keyless entry systems.

PSE searches the link for a PD requesting power, optionally classifies the PD, supplies power to the link if a PD is detected, monitors the power on the link, and disconnects power when it is no longer requested or required. PD participates in the PD detection procedure by presenting a PoE detection signature defined by the IEEE 802.3af standard. If the detection signature is valid, the PD has an option of presenting a classification signature to the PSE to indicate how much power it will draw when powered up. Based on the determined class of the PD, the PSE applies the required power to the PD.

Power supply cost in a PoE system can be significant. In order to better utilize the power supply, a power management system may be utilized to oversee the distribution of power between multiple PDs. There are two conflicting requirements associated with the power supply that must be addressed by a power management system. In order to save power supply cost, it is desirable to use the smallest power supply possible, which inherently means that the power supply will be operated near its maximum output power. Conversely, in order to avoid running out of power, it is desirable to reserve the worst-case maximum power consumption for each PD connected to the system so that all PDs can operate at maximum power level simultaneously without the power supply becoming overloaded.

If all PDs have constant power consumption, then these two requirements can be met simultaneously. However, if the system contains PDs that normally run at a low power level but have transient high power usage, this causes a conflict between the two requirements. For example, if the power supply is sized to run near it's maximum capacity and multiple PDs consume maximum power, the system may be overloaded. If the power supply is sized to handle the maximum load of all PDs simultaneously, then the majority of the time the power supply will be running well below it's rated output.

Currently, information on a PD provided to the power management system is limited to the PD class representing the maximum power level of the PD. This information is communicated to the PSE during the classification operation. In addition, after the PD is powered up and running, the PSE is able to measure the actual PD current.

Based on the PD classification information, the power management system can allocate the maximum power consumption for each PD. The power management system can also look at the measured PD current representing the real-time PD power consumption and add PDs to the PoE system until the real-time power consumption hits some predetermined level.

However, PD information currently provided to the PSE is not sufficient for the power management system to make intelligent decisions about the power consumption characteristics of the connected PDs and perform the risk/benefit analysis of powering more PDs on a PoE system. Therefore, there is a need for a system that would provide the power management system with more detailed information on PDs.

"Power over Ethernet" Cisco Inline Power and IEEE 802.3af' (http://www.cisco.com/warp/public/cc/so/neso/bbbssp/poeie-wp.pdf) discloses power management in which a powered device signals its power requirements to a PSE. US6473608 discloses communication cabling connecting a local area network hub to a plurality of nodes. A power supply distributor provides at least some operating power to act least some of the nodes via the communication cabling.

### Summary of the Disclosure

In accordance with one aspect of the present disclosure, a powered device (PD) configured for receiving power over a communication link, such as an Ethernet link, has a power interface controller for implementing a power supply protocol. The power interface controller is configured for acquiring multiple pieces of PD information representing multiple characteristics of the PD for transferring the information to a power supply device. For example, the multiple pieces of PD information may be programmed into the PD during assembly or acquired by the PD while it is operating.

The various PD characteristics may be transmitted to the power supply device over the communication link during an initialization procedure when the PD is first connected to the power supply device. For example, the PD information may be transferred during or after classification. Alternatively, the PD information may be provided to the power supply device during or after PD power-on.

The multiple pieces of PD information may be transferred to the power supply device in a single data packet or in a sequence of data packets, each of which represents a separate characteristic of the PD.

While power from the power supply device is received over a physical layer of the communication network, the multiple pieces of PD information may be transferred over a link layer of this network above the physical layer. For example, a Link Layer Discovery Protocol may be used for PD information transfer.

Among the multiple pieces of PD information acquired, there may be information on the average power consumption of the PD, peak power consumption, duty cycle of peak power consumption, priority of providing power to the PD, information on a connection line used for delivery of power to the PD, etc. Alternatively, current consumption information may be acquired instead of power consumption information.

In accordance with another aspect of the disclosure, a power supply device coupled to a communication link, such as an Ethernet link, may be configured for receiving multiple pieces of PD information representing multiple characteristics of the PD during a PD initialization procedure.

In accordance with a method of the present disclosure the following steps are carried out to perform power management of multiple powered devices provided with power over a data communication network:
- obtaining over the data communication network, multiple pieces of information representing multiple characteristics of the powered devices, and
- based on the obtained information, allocating power to the powered devices.

Additional advantages and aspects of the disclosure will become readily apparent to those skilled in the art from the following detailed description, wherein embodiments of the present disclosure are shown and described, simply by way of illustration of the best mode contemplated for practicing the present disclosure. As will be described, the disclosure is capable of other and different embodiments, and its several details are susceptible of modification in various obvious respects, all without departing from the spirit of the disclosure. Accordingly, the drawings and description are to be regarded as illustrative in nature, and not as limitative.

### Brief Description of the Drawings

The following detailed description of the embodiments of the present disclosure can best be understood when read in conjunction with the following drawings, in which the features are not necessarily drawn to scale but rather are drawn as to best illustrate the pertinent features, wherein:
FIG. 1 is a diagram illustrating a PoE system of the present disclosure.
FIG. 2 is a diagram illustrating a PD characterization mechanism of the present disclosure that captures information about PD and transmits the PD information to a power supply mechanism.

### Detailed Disclosure of the Embodiments

The present disclosure will be made using the example of providing PD information to a PSE in a PoE system. It will become apparent, however, that the concepts described herein are applicable to any system for providing power over a communication link.

For example, a system of the present disclosure may be used in a local area network (LAN) having a plurality of nodes, a network hub and communication cabling connecting the nodes to the network hub for providing data communications. The network hub may have a power supply device for providing power to a PD over the communication cabling. The LAN may include a system for providing detailed PD information to the power supply device.

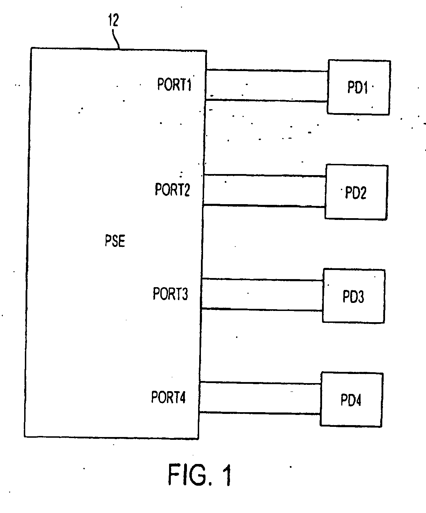

FIG. 1 shows a simplified block-diagram illustrating a PoE system 10 including a PSE 12 having multiple ports 1 to 4 connectable to Powered Devices (PD1 to PD4) via respective links, each of which may.be provided using 2 or 4 sets of twisted pairs within an Ethernet cable. Although FIG. 1 shows four ports of the PSE 12, one skilled in the art would realize that any number of ports may be provided to support power supply to the respective number of PDs.

The PSE 12 may interact with each PD in accordance with the IEEE 802.3af standard. In particular, the PSE 12 and the PD participate in the PD detection procedure, during which the PSE 12 probes a link to detect the PD. If the PD is detected, the PSE 12 checks the PD detection signature to determine whether it is valid or non-valid. The valid and non-valid detection signatures are defined in the IEEE 802.3af standard. While the valid PD detection signature indicates that the PD is in a state where it will accept power, the non-valid PD detection signature indicates that the PD is in a state where it will not accept power.

If the signature is valid, the PD has an option of presenting a classification signature to the PSE to indicate the maximum power the PD will draw when powered up. For example, a PD may be classified as class 0 to class 4. A PD of class 1 requires that the PSE supplies at least 4.0W, a PD of class 2 requires that the PSE supplies at least 7.0W, and a PD of class 0, 3 or 4 requires at least 15.4W. Based on the determined class of the PD, the PSE 12 may allocate the maximum power required by the PD and provide this power to the PD..

In a conventional PoE system, the PD class is the only information acquired by the power supply interface when the respective PD is being set up for receiving power over an Ethernet link. For example, in response to a probing voltage from the PSE 12, the PD power supply interface may draw classification current representing a desired class of the PD. For class 0, the PD power supply interface may draw current in the range from 0mA to 4mA; for class 1, the classification current may be from 9mA to 12mA; for class 2 - from 17mA to 20mA; for class 3 - from 26mA to 30mA; and for class 4, the PD power supply interface may draw current from 36mA to 44mA. The PD power supply interface may include a classification resistor R_{CLASS} having a value selectable to set a desired magnitude of the classification current.

Based on the PD classification information, the PSE 12 can allocate the maximum power required for each PD. However, this information is not sufficient to allow the PSE 12 to make intelligent decisions about the power consumption characteristics of PDs being powered up and perform the risk/benefit analysis of powering more PDs.

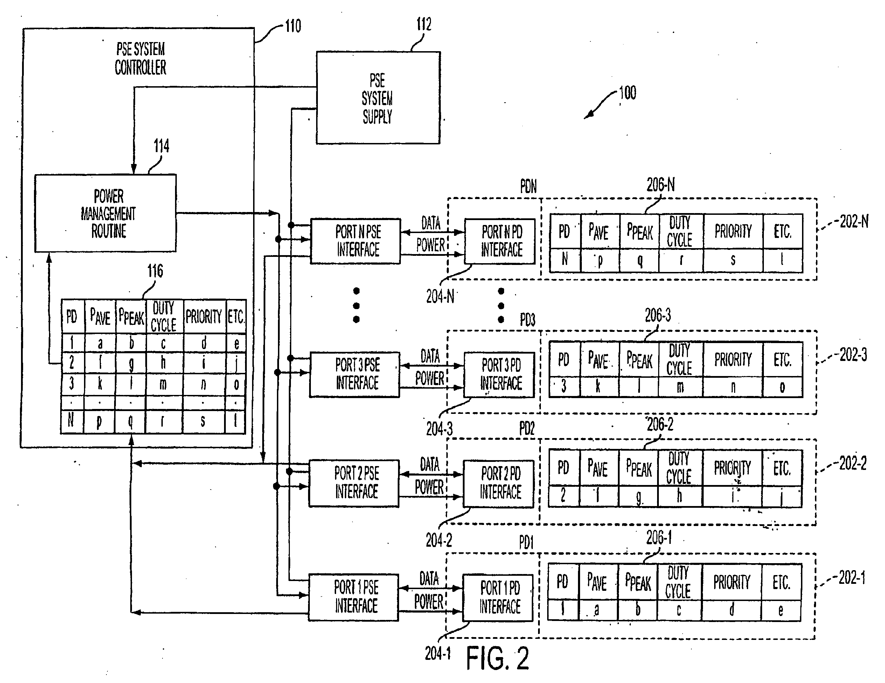

FIG. 2 illustrates a PD characterization mechanism 100 of the present disclosure that enables the PSE 12 to obtain PD parameter information representing multiple parameters of the PD. The PD characterization mechanism 100 employs a PSE system controller 110 that controls interface circuits of PSE ports 1, 2, 3,..., N to supply power from a power supply 112 to PDs 1, 2, 3,..., N linked to the respective ports. In particular, the PSE system controller 110 may run a power management routine 114 to control allocation of power to each of the PDs in the PoE system based on power supply capacity information from the power supply 112.

For example, the PDs may be such devices as digital IP telephones, wireless network access points, PDA or notebook computer docking stations, cell phone chargers, HVAC thermostats, factory automation equipment, ID scanners, security systems, credit card terminals, keyless entry systems, etc. The power management routine 114 may have access to a PD information table 116 containing detailed information on PDs 1, 2, 3,....N that may be powered by the PSE. For example, the PD information table 116 may have a separate section for each PD connectable to the PSE. The PD information table 116 may be stored in a memory device arranged in the PSE or outside of the PSE. As discussed in more detail below, the detailed PD information enables the power management routine 114 to make intelligent power management decisions so as to supply power to the maximum possible number of PDs using limited power supply capability.

Each of the PDs 1, 2, 3,...,N may include a respective PD system controller 202-1, 202-2, 202-3, ..., 202-N that controls power to the PD over the Ethernet link, and a respective PD interface circuit 204-1, 204-2, 204-3, ..., 204-N linked to the corresponding PSE port to support interaction between the PD and the PSE. Each of the PD system controllers 202-1, 202-2, 202-3,..., 202-N has access to a respective PD information table 206-1, 206-2, 206-3,..., 206-N containing multiple values characterizing various aspects of the PD. For example, the PD information table 206 may include values representing such characteristics of the PD as the average power consumption, peak power consumption, duty - cycle of peak power consumption, power priority level, etc. The PD information table 206 may be stored in a memory device arranged in the respective PD or outside of the PD.

When a PD is built or configured for receiving power over the Ethernet, the PD system controller 202 may acquire multiple pieces of PD information that could be helpful to enable the PSE to provide efficient power management. In particular, the PD system controller 202 may obtain values representing multiple PD characteristics relevant for power management. The PD system controller 202 may load these values into the PD information table 206 and may update them if necessary. The PD system controller 202 may be programmed to acquire values of PD characteristics automatically, for example, during PD set up or testing. Alternatively, the PD information may be entered manually by a user or a designer and then programmed into the memory during manufacturing. In addition, the PD system controller 202 may place into the PD information table 206 various information relating to operating PD conditions or conditions of the connection lines.

During an initialization procedure that may be performed each time a particular PD is being connected to the PSE, the PD system controller 202 reads the PD information table 206 to transfer all or selected PD information to the PSE system controller 110 that places the information into the respective section of the PD information table 116. Alternatively, the PD system controller 202 may transfer the stored information to the PSE system controller 110 during a PD classification procedure, after the classification procedure, during the PD power on sequence or when the PD is up and running. The PD information stored in the PD information table 116 of the PSE may be updated during the PD operation, if necessary. Some PD information may be monitored by the PSE controller 110 or the PD controller 202 and may be provided directly to the power management routine 114 "on-the-fly" without storing it in the information table 206 of the PD and/or in the information table of the PSE.

Multiple pieces of PD information representing multiple characteristics of a PD may be sent from the PD to the PSE in one information package transmitted during the initialization procedure or at any other desired period of time. Alternatively, the detailed PD information may be sent in a sequence of information packages, each of which may be sent at a desired time period and may represent information on one or more characteristics of the PD.

A data exchange protocol may be established between the PSE and the respective PD to support transferring the detailed PD information from the PD to the PSE. For example, a two-way communication may be provided between the PSE interface port and the interface circuit of the respective PD. While, power from the PSE to PDs is provided over the physical layer of the Ethernet network linking the PSE and the PDs, a transfer of the detailed PD information may be carried out over the link layer of the Ethernet network above the physical layer. For example, Link Layer Discovery Protocol (LLDP) ratified as IEEE standard 802. 1AB-2005 may be employed to support the PD characterization mechanism 100. LLDP is a neighbor discovery protocol. It allows Ethernet network devices to advertise information about themselves to other nodes on the network and store the information they discover.

In particular, LLDP may be used to define a set of common messages for the PSE and PDs. These messages may be transmitted between the PSE and PDs in accordance with LLDP. In particular, LLDP messages may convey detailed PD information from the PD to the PSE. Multiple LLDP messages corresponding to respective characteristics of the PD may be transmitted in one LAN packet in the form of a type length value (TLV) field. Alternatively, the PD parameters may be transferred in a sequence of data packets, each of which represents a respective PD characteristic. As defined by the LLDP, the received messages may be stored in Management Information Base (MIB) arranged in accordance with IEEE-defined Simple Network Management Protocol (SNMP).

Alternatively, the transfer of detailed PD information from the PD to the PSE may be provided over the physical layer. For example, parameters of signals involved in the PoE protocol may be modulated to transmit required information from the PD to the PSE. Examples of data communication between the PSE and the PD are described in copending patent application No US2006/168459 filed on November 15, 2005, entitled "PROVIDING DATA COMMUNICATION BETWEEN POWER SUPPLY DEVICE AND POWERED DEVICE IN SYSTEM FOR SUPPLYING POWER OVER COMMUNICATION LINK" and assigned to Linear Technology Corporation, the assignee of the present application.

As indicated above, the PSE may utilize the detailed PD information provided by multiple PDs to make the power management routine 114 more efficient. In particular, a PD may acquire and send information on its average power consumption. This information allows the power management routine 114 to allocate to PDs power levels corresponding to their average power consumption instead of their maximum power consumption.

The information on the peak power consumption, together with information on the duty cycle of the peak power consumption, enables the power management routine 114 to determine probability that multiple PDs will require peak power at the same time. Knowing this probability, the power management routine 114 may estimate total power required for a certain time period. Moreover, the PSE power supply 112 may be able to operate in an overload mode for a certain duration of time. The calculated probability of multiple PDs operating at their peak power consumption allows the PSE to determine whether the PSE power supply 112 will be able to operate in the overload mode long enough to support multiple PDs during periods of peak power consumption.

PDs may transfer information on their priorities to support a PD priority scheme of the power management routine 114. As the power available from the power supply 112 becomes restricted, the PSE system controller 110 may remove or reduce power allocated to a lower-priority PD in order to grant a request for power from a higher-priority PD. Also, the priority scheme enables the PSE to reduce or remove power allocated to a lower-priority PD before reducing or removing power allocated to a higher-priority PD.

PDs may transfer information on a minimum power level needed to perform some predefined tasks required to prevent that PD from being damaged. For example, the PD may indicate the power level required to keep its memory alive and support minimum functions. In response to this request, the power management routine 114 may prevent the power allocated to that PD from being reduced below the requested minimum level.

PDs may transfer tables indicating their power consumption for particular operational functions to allow the power management routine 114 to allocate sufficient power for mandatory operations. PD may provide an indication whether its operation is critical for certain emergency conditions such as fire, power loss, etc. and whether the PD has a backup or an alternative power supply available.

PDs may provide the PSE with tables of power consumption levels, associated time durations, and duty cycles for each of the defined power levels. Based on these table, the power management routine 114 may estimate total power consumption for various time periods.

Currently, the PSE must allocate power to compensate for the maximum possible power drop due to the cable on the PD side. To enable the power management routine 114 to reduce power allocated to the cable drop, PD may provide the PSE with information relating to the PD physical layer connection. For example, the PD may indicate the voltage at its port, the resistance of its cable, its wiring information such as the use of Ethernet data pairs, spare pairs or both pairs. This information enables the PSE to determine how much power is being actually dropped in the cable, and to allocate power to compensate for the actual power drop instead of the maximum possible power drop.

Hence, the PD characterization mechanism of the present disclosure allows the PD to acquire multiple pieces of information relating to its parameters and conditions. This information is transferred to the PSE to enable the power management system to manage power allocation to multiple PDs in a more efficient manner. For example, the power management system may be able to determine which PDs have an alternative power supply, how much power each PD receives, which PDs to drop off in case of overload, and which PDs to keep-powered under various conditions such as emergencies.

A two way communication may be provided between the PSE and PD to enable the PSE to send power management commands to PD. For example, the PSE may request particular PDs to limit their power consumption to predefined levels in order to keep the maximum number of PDs operating, even if some of them operate with reduced functionality.

The foregoing description illustrates and describes aspects of the present invention. Additionally, the disclosure shows and describes only preferred embodiments, but as aforementioned, it is to be understood that the invention is capable of use in various other combinations, modifications, and environments and is capable of changes or modifications within the scope of the inventive concept as expressed herein, commensurate with the above teachings, and/or the skill or knowledge of the relevant art.

For example, one skilled in the art would understand that instead of PD power consumption information, PD current consumption information may be acquired by a PD controller and transferred to a PSE. Further, detailed information on characteristics of a particular PD may be acquired by an external controller remote with respect to the PD. For example, the external controller may be provided at a node of a local area network, or at a network hub, together with the PSE.

The embodiments described hereinabove are further intended to explain best modes known of practicing the invention and to enable others skilled in the art to utilize the invention in such, or other, embodiments and with the various modifications required by the particular applications or uses of the invention.

It is intended that the appended claims be construed to include alternative embodiments.

## Claims

1. A powered device, PD, configured for receiving power over a communication link, comprising:
a power supply interface controller (202) for implementing a power supply protocol performed to receive power from a power supply device (12, 110, 112) over the communication link,
the power supply interface controller being configured for acquiring multiple pieces of PD information representing multiple characteristics of the PD, the power supply interface controller being programmed to acquire values of PD characteristics automatically, or the PD information being entered manually,
the power supply interface controller being configured to transfer the PD information to the power supply device.

2. The device of claim 1, wherein the power supply interface controller is further configured for transferring the multiple pieces of PD information to the power supply device over the communication link.

3. The device of claim 1, wherein the power supply interface controller is further configured for transferring the multiple pieces of PD information to the power supply device during an initialization procedure performed when the PD is being connected to the power supply device.

4. The device of claim 1, wherein the power supply interface controller is further configured for transferring the multiple pieces of PD information to the power supply device during a power-on procedure performed before the power supply device provides power to the PD.

5. The device of claim 1, wherein the power supply interface controller is further configured for transferring the multiple pieces of PD information to the power supply device after the power supply device provides power to the PD.

6. The device of claim 1 , wherein the power supply interface controller is further configured for transferring the multiple pieces of PD information to the power supply device in a single data packet containing the multiple pieces of PD information.

7. The device of claim 1, wherein the power supply interface controller is further configured for transferring the multiple pieces of PD information in a sequence of data packets, each of which represents a separate characteristic of the PD.

8. The device of claim 1, wherein the power supply interface controller is further configured for receiving power from the power supply device over a physical layer of a communication network including the communication link, and for transferring the multiple pieces of PD information over a link layer of the communication network.

9. The device of claim 8, wherein the power supply interface controller is further configured for transferring the multiple pieces of PD information to the power supply device using a Link Layer Discovery Protocol.

10. The device of claim 1 , wherein the power supply interface controller is further configured for receiving power from an Ethernet link.

11. The device of claim 1, wherein the power supply interface controller is further configured for storing the multiple pieces of PD information.

12. The device of claim 11, wherein the power supply interface controller is further configured for updating stored PD information during operation of the PD.

13. The device of claim 1, wherein the power supply interface controller is configured for acquiring information on average power consumption of the PD.

14. The device of claim 1, wherein the power supply interface controller is configured for acquiring information on peak power consumption of the PD.

15. The device of claim 1, wherein the power supply interface controller is configured for acquiring information on duty cycle of peak power consumption of the PD.

16. The device of claim 1 , wherein the power supply interface controller is configured for acquiring information on a priority of providing power to the PD.

17. The device of claim 1, wherein the power supply interface controller is configured for acquiring information on a connection line for delivery of power to the PD.

18. The device of claim 1 , wherein the power supply interface controller is configured for acquiring information on current consumption.

19. The device of claim 1, wherein the power supply interface controller is configured for programming the multiple pieces of PD information into a PD memory during manufacturing of the PD.

20. A system for powering a PD over a communication link, comprising:
a power supply device (12, 110, 112) coupled to the communication link for providing power to the PD;
the power supply device being configured for performing a PD initialization procedure to initialize providing power to the PD;
the power supply device being further configured for receiving during the PD initialization procedure, multiple pieces of PD information representing multiple characteristics of the PD; the PD information being transferred from the PD,
the power supply device being configured to utilize the PD information provided by the PD to make a power management routine more efficient.

21. The system of claim 20, wherein the power supply device is configured for receiving the multiple pieces of PD information during a classification procedure performed to determine maximum power level required by the PD.

22. The system of claim 20, wherein the power supply device is configured for receiving a PD information packet having multiple fields, each of which represents a characteristic of the PD.

23. The system of claim 20, wherein the- power supply device contains a power management mechanism (202) for managing power allocation to multiple PDs.

24. The system of claim 23, wherein the power management mechanism is responsive to the multiple pieces of PD information.

25. The system of claim 24, wherein based on the multiple pieces of PD information, the power management mechanism determines whether the PD have an alternative power supply.

26. The system of claim 24, wherein based on the multiple pieces of PD information, the power management mechanism determines how much power the PD receives.

27. The system of claim 24, wherein based on the multiple pieces of PD information, the power management mechanism determines whether power to the PD should be reduced during a predetermined condition.

28. The system of claim 24, wherein based on the multiple pieces of PD information, the power management mechanism determines whether the PD be powered during a predetermined condition.

29. The system of claim 20, wherein the power supply device is configured for supplying power to the PD over an Ethernet link.

30. The system of claim 20, wherein the power supply device is configured for providing power to the PD over a physical layer of a communication network including the communication link, and for receiving the multiple pieces of PD information over a link layer of the communication network above the physical layer.

31. The system of claim 30, wherein the power supply device is configured for receiving the multiple pieces of PD information using a Link Layer Discovery Protocol.

32. The system of claim 20, wherein the power supply device is configured for providing power to the PD and receiving the multiple pieces of PD information over a physical layer of a communication network

33. The system of claim 20, wherein the power supply device is configured for receiving information on a minimum power level needed by the PD to perform predefined tasks required to prevent the PD from being damaged.

34. The system of claim 20, wherein the power supply device is configured for receiving information from the PD as to whether operation of the PD is critical for an emergency condition.

35. The system of claim 20, wherein the power supply device is configured for receiving from the PD a table of power consumption levels (206) to estimate power consumption of the PD for a predetermined time period.

36. The system of claim 20, wherein the power supply device is configured for receiving information on physical layer connection of the PD to determine how much power is being lost due to the physical layer connection.

37. The system of claim 20, wherein the power supply device is configured for receiving information from the PD on-the-fly.

38. The system of claim 20, wherein the power supply device is provided in a network hub of a local area network having:
at least a pair of network nodes, and
communication cabling for connecting the network nodes to the network hub to provide data communications,
and to provide power from the power supply device to the PD,
at least one network node being configured to store the multiple pieces of PD information representing multiple characteristics of the PD.

39. The system of claim 38, wherein the network node is configured for transferring the multiple pieces of PD information to the power supply device when the PD is being connected to the power supply device.

40. The system of claim 38, wherein the power supply device is configured for receiving a PD information packet representing the multiple pieces of PD information.

41. The system of claim 38, wherein the power supply device is configured for supplying power to the PD over a physical layer of the network, and for receiving the multiple pieces of PD information over a link layer of the network.

42. The system of claim 38, wherein the power supply device is configured for supplying power to the PD and for receiving the multiple pieces of PD information over a physical layer of the network

43. The system of claim 38, wherein the network hub and the network nodes are configured in an Ethernet network.

44. A method of power management of multiple powered devices provided with power over a data communication network, the method comprising the steps of:
obtaining over the data communication network, multiple pieces of powered device information representing multiple characteristics of the powered devices, the powered device information being provided by the multiple powered devices; and
based on the obtained powered device information, allocating power provided over the data communication network to the powered devices.

## Patentansprüche

1. Angetriebe Vorrichtung, PD, konfiguriert zum Empfangen von Leistung über eine Kommunikationsverbindung, umfassend:
eine Leistungsversorgungsschnittstellenregel- bzw. -steuereinrichtung (202) zum Implementieren eines Leistungsversorgungsprotokolls, das ausgeführt wird, um Leistung von einer Leistungsversorgungsvorrichtung (12, 110, 112) über die Kommunikationsverbindung zu empfangen,
wobei die Leistungsversorgungsschnittstellenregel- bzw. -steuereinrichtung zum Erfassen mehrerer PD-Informationen konfiguriert ist, die mehrere Charakteristika der PD darstellen, wobei die Leistungsversorgungsschnittstellenregel- bzw. -steuereinrichtung programmiert ist, Werte von PD-Charakteristika automatisch zu erfassen, oder die PD-Informationen manuell eingegeben werden,
wobei die Leistungsversorgungsschnittstellenregel- bzw. -steuereinrichtung konfiguriert ist, die PD-Informationen an die Leistungsversorgungsvorrichtung zu übertragen.

2. Vorrichtung nach Anspruch 1, wobei die Leistungsversorgungsschnittstellenregel- bzw. -steuereinrichtung ferner konfiguriert ist zum Übertragen der mehreren PD-Informationen an die Leistungsversorgungsvorrichtung über die Kommunikationsverbindung.

3. Vorrichtung nach Anspruch 1, wobei die Leistungsversorgungsschnittstellenregel- bzw. -steuereinrichtung ferner konfiguriert ist zum Übertragen der mehreren PD-Informationen an die Leistungsversorgungsvorrichtung während einer Initialisierungsprozedur, die durchgeführt wird, wenn die PD mit der Leistungsversorgungsvorrichtung verbunden wird.

4. Vorrichtung nach Anspruch 1, wobei die Leistungsversorgungsschnittstellenregel- bzw. -steuereinrichtung ferner konfiguriert ist zum Übertragen der mehreren PD-Informationen an die Leistungsversorgungsvorrichtung während einer Einschaltprozedur, die durchgeführt wird, bevor die Leistungsversorgungsvorrichtung Leistung an die PD bereitstellt.

5. Vorrichtung nach Anspruch 1, wobei die Leistungsversorgungsschnittstellenregel- bzw. -steuereinrichtung ferner konfiguriert ist zum Übertragen der mehreren PD-Informationen an die Leistungsversorgungsvorrichtung, nachdem die Leistungsversorgungsvorrichtung Leistung an die PD bereitstellt.

6. Vorrichtung nach Anspruch 1, wobei die Leistungsversorgungsschnittstellenregel- bzw. -steuereinrichtung ferner konfiguriert ist zum Übertragen der mehreren PD-Informationen an die Leistungsversorgungsvorrichtung in einem einzelnen bzw. einzigen Datenpaket, das die mehreren PD-Informationen enthält.

7. Vorrichtung nach Anspruch 1, wobei die Leistungsversorgungsschnittstellenregel- bzw. -steuereinrichtung ferner konfiguriert ist zum Übertragen der mehreren PD-Informationen in einer Folge von Datenpaketen, von denen jedes eine separate Charakteristik der PD darstellt.

8. Vorrichtung nach Anspruch 1, wobei die Leistungsversorgungsschnittstellenregel- bzw. -steuereinrichtung ferner konfiguriert ist zum Empfangen von Leistung von der Leistungsversorgungsvorrichtung über eine physikalische Schicht eines Kommunikationsnetzwerks, das die Kommunikationsverbindung enthält, und zum Übertragen der mehreren PD-Informationen über eine Verbindungsschicht des Kommunikationsnetzwerks.

9. Vorrichtung nach Anspruch 8, wobei die Leistungsversorgungsschnittstellenregel- bzw. -steuereinrichtung ferner konfiguriert ist zum Übertragen der mehreren PD-Informationen an die Leistungsversorgungsvorrichtung unter Verwendung eines Link Layer Discovery Protokolls.

10. Vorrichtung nach Anspruch 1, wobei die Leistungsversorgungsschnittstellenregel- bzw. -steuereinrichtung ferner konfiguriert ist zum Empfangen von Leistung von einer Ethernetverbindung.

11. Vorrichtung nach Anspruch 1, wobei die Leistungsversorgungsschnittstellenregel- bzw. -steuereinrichtung ferner konfiguriert ist zum Speichern der mehreren PD-Informationen.

12. Vorrichtung nach Anspruch 11, wobei die Leistungsversorgungsschnittstellenregel- bzw. -steuereinrichtung ferner konfiguriert ist zum Aktualisieren gespeicherter PD-Informationen während eines Betriebs der PD.

13. Vorrichtung nach Anspruch 1, wobei die Leistungsversorgungsschnittstellenregel- bzw. -steuereinrichtung konfiguriert ist zum Erfassen von Informationen zum durchschnittlichen Leistungsverbrauch der PD.

14. Vorrichtung nach Anspruch 1, wobei die Leistungsversorgungsschnittstellenregel- bzw. -steuereinrichtung konfiguriert ist zum Erfassen von Informationen zum Spitzenleistungsverbrauch der PD.

15. Vorrichtung nach Anspruch 1, wobei die Leistungsversorgungsschnittstellenregel- bzw. -steuereinrichtung konfiguriert ist zum Erfassen von Informationen zum Taktzyklus des Spitzenleistungsverbrauchs der PD.

16. Vorrichtung nach Anspruch 1, wobei die Leistungsversorgungsschnittstellenregel- bzw. -steuereinrichtung konfiguriert ist zum Erfassen von Informationen zu einer Priorität des Bereitstellens von Leistung an die PD.

17. Vorrichtung nach Anspruch 1, wobei die Leistungsversorgungsschnittstellenregel- bzw. -steuereinrichtung konfiguriert ist zum Erfassen von Informationen zu einer Verbindungsleitung zum Liefern von Leistung an die PD.

18. Vorrichtung nach Anspruch 1, wobei die Leistungsversorgungsschnittstellenregel- bzw. -steuereinrichtung konfiguriert ist zum Erfassen von Informationen zu dem aktuellen Verbrauch bzw. Stromverbrauch.

19. Vorrichtung nach Anspruch 1, wobei die Leistungsversorgungsschnittstellenregel- bzw. -steuereinrichtung konfiguriert ist zum Einprogrammieren der mehreren PD-Informationen in einen PD-Speicher während der Herstellung der PD.

20. System zum Antreiben einer PD über eine Kommunikationsverbindung, umfassend:
eine Leistungsversorgungsvorrichtung (12, 110, 112), die mit der Kommunikationsverbindung zum Bereitstellen von Leistung an die PD gekoppelt ist;
wobei die Leistungsversorgungsvorrichtung zum Durchführen einer PD-Initialisierungsprozedur konfiguriert ist, um das Bereitstellen von Leistung an die PD zu initialisieren;
wobei die Leistungsversorgungsvorrichtung ferner konfiguriert ist zum Empfangen, während der PD-Initialisierungsprozedur, von mehreren PD-Informationen, die mehrere Charakteristika der PD darstellen; wobei die PD-Informationen von der PD übertragen werden,
wobei die Leistungsversorgungsvorrichtung konfiguriert ist, die von der PD bereitgestellten PD-Informationen zu nutzen, um eine Leistungsverwaltungsroutine effizienter zu machen.

21. System nach Anspruch 20, wobei die Leistungsversorgungsvorrichtung konfiguriert ist zum Empfangen der mehreren PD-Informationen während einer Klassifizierungsprozedur, die zum Bestimmen des maximalen Leistungspegels durchgeführt wird, der von der PD benötigt wird.

22. System nach Anspruch 20, wobei die Leistungsversorgungsvorrichtung konfiguriert ist zum Empfangen eines PD-Informationspakets mit mehreren Feldern, von denen jedes eine Charakteristik der PD darstellt.

23. System nach Anspruch 20, wobei die Leistungsversorgungsvorrichtung einen Leistungsverwaltungsmechanismus (202) zum Verwalten der Leistungszuteilung an mehrere PDs enthält.

24. System nach Anspruch 23, wobei der Leistungsverwaltungsmechanismus auf die mehreren PD-Informationen anspricht.

25. System nach Anspruch 24, wobei, basierend auf den mehreren PD-Informationen, der Leistungsverwaltungsmechanismus bestimmt, ob die PD eine alternative Leistungsversorgung aufweist.

26. System nach Anspruch 24, wobei, basierend auf den mehreren PD-Informationen, der Leistungsverwaltungsmechanismus bestimmt, wieviel Leistung die PD empfängt.

27. System nach Anspruch 24, wobei, basierend auf den mehreren PD-Informationen, der Leistungsverwaltungsmechanismus bestimmt, ob Leistung an die PD während einer vorbestimmten Bedingung reduziert werden sollte.

28. System nach Anspruch 24, wobei, basierend auf den mehreren PD-Informationen, der Leistungsverwaltungsmechanismus bestimmt, ob die PD während einer vorbestimmten Bedingung anzutreiben ist.

29. System nach Anspruch 20, wobei die Leistungsversorgungsvorrichtung konfiguriert ist zum Zuführen von Leistung an die PD über eine Ethernetverbindung.

30. System nach Anspruch 20, wobei die Leistungsversorgungsvorrichtung konfiguriert ist zum Bereitstellen von Leistung an die PD über eine physikalische Schicht eines Kommunikationsnetzwerks, das die Kommunikationsverbindung enthält, und zum Empfangen der mehreren PD-Informationen über eine Verbindungsschicht des Kommunikationsnetzwerks über der physikalischen Schicht.

31. System nach Anspruch 30, wobei die Leistungsversorgungsvorrichtung konfiguriert ist zum Empfangen der mehreren PD-Informationen unter Verwendung eines Link Layer Discovery Protokolls.

32. System nach Anspruch 20, wobei die Leistungsversorgungsvorrichtung konfiguriert ist zum Bereitstellen von Leistung an die PD und Empfangen der mehreren PD-Informationen über eine physikalische Schicht eines Kommunikationsnetzwerks.

33. System nach Anspruch 20, wobei die Leistungsversorgungsvorrichtung konfiguriert ist zum Empfangen von Informationen zu einem Minimumleistungspegel, der von der PD benötigt wird, um vordefinierte Aufgaben durchzuführen, die erforderlich sind, um zu verhindern, dass die PD beschädigt wird.

34. System nach Anspruch 20, wobei die Leistungsversorgungsvorrichtung konfiguriert ist zum Empfangen von Informationen von der PD darüber, ob ein Betrieb der PD für eine Notfallbedingung entscheidend ist.

35. System nach Anspruch 20, wobei die Leistungsversorgungsvorrichtung konfiguriert ist zum Empfangen, von der PD, einer Tabelle mit Leistungsversorgungspegeln (206), um einen Leistungsverbrauch der PD für einen vorbestimmten Zeitraum zu schätzen.

36. System nach Anspruch 20, wobei die Leistungsversorgungsvorrichtung konfiguriert ist zum Empfangen von Informationen zu einer Physikalische-Schicht-Verbindung der PD, um zu bestimmen, wieviel Leistung auf Grund der Physikalische-Schicht-Verbindung verloren geht.

37. System nach Anspruch 20, wobei die Leistungsversorgungsvorrichtung konfiguriert ist zum Empfangen von Informationen von der PD auf spontane Weise.

38. System nach Anspruch 20, wobei die Leistungsversorgungsvorrichtung in einem Netzwerk-Hub in einem Local Area Network bzw. lokalen Netzwerk bereitgestellt ist, das aufweist:
zumindest ein Paar Netzwerkknoten, und
Kommunikationsverkabelung zum Verbinden der Netzwerkknoten mit dem Netzwerk-Hub, um Datenkommunikationen bereitzustellen,
und um Leistung von der Leistungsversorgungsvorrichtung an die PD bereitzustellen,
wobei zumindest ein Netzwerkknoten konfiguriert ist, die mehreren PD-Informationen zu speichern, die mehrere Charakteristika der PD darstellen.

39. System nach Anspruch 38, wobei der Netzwerkknoten konfiguriert ist zum Übertragen der mehreren PD-Informationen an die Leistungsversorgungsvorrichtung, wenn die PD mit der Leistungsversorgungsvorrichtung verbunden wird.

40. System nach Anspruch 38, wobei die Leistungsversorgungsvorrichtung konfiguriert ist zum Empfangen eines PD-Informationspakets, das die mehreren PD-Informationen darstellt.

41. System nach Anspruch 38, wobei die Leistungsversorgungsvorrichtung konfiguriert ist zum Zuführen von Leistung an die PD über eine physikalische Schicht des Netzwerks, und zum Empfangen der mehreren PD-Informationen über eine Verbindungsschicht des Netzwerks.

42. System nach Anspruch 38, wobei die Leistungsversorgungsvorrichtung konfiguriert ist zum Zuführen von Leistung an die PD und zum Empfangen der mehreren PD-Informationen über eine physikalische Schicht des Netzwerks.

43. System nach Anspruch 38, wobei das Netzwerk-Hub und die Netzwerkknoten in einem Ethernetzwerk konfiguriert sind.

44. Verfahren zur Leistungsverwaltung für mehrere angetriebene Vorrichtungen, die mit Leistung über ein Datenkommunikationsnetzwerk versorgt werden, wobei das Verfahren die Schritte umfasst:
Erhalten, über das Datenkommunikationsnetzwerk, von mehreren Angetriebene-Vorrichtung-Informationen, die mehrere Charakteristika der angetriebenen Vorrichtungen darstellen, wobei die Angetriebene-Vorrichtung-Informationen durch die mehreren angetriebenen Vorrichtungen bereitgestellt werden; und
basierend auf den Angetriebene-Vorrichtung-Informationen, Zuteilen von Leistung, die über das Datenkommunikationsnetzwerk bereitgestellt wird, an die angetriebenen Vorrichtungen.

## Revendications

1. Dispositif alimenté, PD, configuré pour recevoir de la puissance sur une liaison de communication, comprenant :
un contrôleur d'interface d'alimentation électrique (202) pour mettre en oeuvre un protocole d'alimentation électrique réalisé pour recevoir de la puissance d'un dispositif d'alimentation électrique (12, 110, 112) sur la liaison de communication,
le contrôleur d'interface d'alimentation électrique étant configuré pour acquérir de multiples informations de PD représentant de multiples caractéristiques du PD, le contrôleur d'interface d'alimentation électrique étant programmé pour acquérir des valeurs de caractéristiques de PD automatiquement ou les informations de PD étant saisies manuellement,
le contrôleur d'interface d'alimentation électrique étant configuré pour transférer les informations de PD au dispositif d'alimentation électrique.

2. Dispositif selon la revendication 1, dans lequel le contrôleur d'interface d'alimentation électrique est en outre configuré pour transférer les multiples informations de PD au dispositif d'alimentation électrique sur la liaison de communication.

3. Dispositif selon la revendication 1, dans lequel le contrôleur d'interface d'alimentation électrique est en outre configuré pour transférer les multiples informations de PD au dispositif d'alimentation électrique au cours d'une procédure d'initialisation réalisée lorsque le PD est connecté au dispositif d'alimentation électrique.

4. Dispositif selon la revendication 1, dans lequel le contrôleur d'interface d'alimentation électrique est en outre configuré pour transférer les multiples informations de PD au dispositif d'alimentation électrique au cours d'une procédure de mise sous tension réalisée avant que le dispositif d'alimentation électrique ne fournisse de puissance au PD.

5. Dispositif selon la revendication 1, dans lequel le contrôleur d'interface d'alimentation électrique est en outre configuré pour transférer les multiples informations de PD au dispositif d'alimentation électrique après que le dispositif d'alimentation électrique fournit de la puissance au PD.

6. Dispositif selon la revendication 1, dans lequel le contrôleur d'interface d'alimentation électrique est en outre configuré pour transférer les multiples informations de PD au dispositif d'alimentation électrique en un seul paquet de données contenant les multiples informations de PD.

7. Dispositif selon la revendication 1, dans lequel le contrôleur d'interface d'alimentation électrique est en outre configuré pour transférer les multiples informations de PD en une séquence de paquets de données dont chacune représente une caractéristique séparée du PD.

8. Dispositif selon la revendication 1, dans lequel le contrôleur d'interface d'alimentation électrique est en outre configuré pour recevoir de la puissance du dispositif d'alimentation électrique sur une couche physique d'un réseau de communication incluant la liaison de communication et pour transférer les multiples informations de PD sur une couche de liaison du réseau de communication.

9. Dispositif selon la revendication 8, dans lequel le contrôleur d'interface d'alimentation électrique est en outre configuré pour transférer les multiples informations de PD au dispositif d'alimentation électrique en utilisant un protocole LLDP.

10. Dispositif selon la revendication 1, dans lequel le contrôleur d'interface d'alimentation électrique est en outre configuré pour recevoir de la puissance d'une liaison Ethernet.

11. Dispositif selon la revendication 1, dans lequel le contrôleur d'interface d'alimentation électrique est en outre configuré pour stocker les multiples informations de PD.

12. Dispositif selon la revendication 11, dans lequel le contrôleur d'interface d'alimentation électrique est en outre configurée pour mettre à jour des informations de PD stockées au cours du fonctionnement du PD.

13. Dispositif selon la revendication 1, dans lequel le contrôleur d'interface d'alimentation électrique est configuré pour acquérir des informations sur une consommation électrique moyenne du PD.

14. Dispositif selon la revendication 1, dans lequel le contrôleur d'interface d'alimentation électrique est configuré pour acquérir des informations sur une consommation électrique de pointe du PD.

15. Dispositif selon la revendication 1, dans lequel le contrôleur d'interface d'alimentation électrique est configuré pour acquérir des informations sur le cycle de service de la consommation électrique de pointe du PD.

16. Dispositif selon la revendication 1, dans lequel le contrôleur d'interface d'alimentation électrique est configuré pour acquérir des informations sur une priorité de fourniture de puissance au PD.

17. Dispositif selon la revendication 1, dans lequel le contrôleur d'interface d'alimentation électrique est configuré pour acquérir des informations sur une ligne de connexion pour la livraison de puissance au PD.

18. Dispositif selon la revendication 1, dans lequel le contrôleur d'interface d'alimentation électrique est configuré pour acquérir des informations sur une consommation de courant.

19. Dispositif selon la revendication 1, dans lequel le contrôleur d'interface d'alimentation électrique est configuré pour programmer les multiples informations de PD dans une mémoire de PD au cours de la fabrication du PD.

20. Système pour alimenter un PD sur une liaison de communication, comprenant :
un dispositif d'alimentation électrique (12, 110, 112) raccordé à la liaison de communication pour fournir de la puissance au PD ;
le dispositif d'alimentation électrique étant configuré pour réaliser une procédure d'initialisation du PD afin d'initialiser la fourniture de puissance au PD;
le dispositif d'alimentation électrique étant en outre configuré pour recevoir au cours de la procédure d'initialisation du PD de multiples informations de PD représentant de multiples caractéristiques du PD ; les informations de PD étant transférées depuis le PD,
le dispositif d'alimentation électrique étant configuré pour utiliser les informations de PD fournies par le PD pour rendre une routine de gestion de puissance plus efficace.

21. Système selon la revendication 20, dans lequel le dispositif d'alimentation électrique est configuré pour recevoir les multiples informations de PD au cours d'une procédure de classification réalisée pour déterminer le niveau de puissance maximal requis par le PD.

22. Système selon la revendication 20, dans lequel le dispositif d'alimentation électrique est configuré pour recevoir un paquet d'informations de PD ayant de multiples champs dont chacun représente une caractéristique du PD.

23. Système selon la revendication 20, dans lequel le dispositif d'alimentation électrique contient un mécanisme de gestion de puissance (202) pour gérer l'attribution de puissance à de multiples PD.

24. Système selon la revendication 23, dans lequel le mécanisme de gestion de puissance est réactif aux multiples informations de PD.

25. Système selon la revendication 24, dans lequel le mécanisme de gestion de puissance détermine si le PD a une alimentation électrique alternative en fonction des multiples informations de PD.

26. Système selon la revendication 24, dans lequel le mécanisme de gestion de puissance détermine quelle quantité de puissance le PD reçoit en fonction des multiples informations de PD.

27. Système selon la revendication 24, dans lequel le mécanisme de gestion de puissance détermine si la puissance vers le PD doit être réduite au cours d'une condition prédéterminée en fonction des multiples informations de PD.

28. Système selon la revendication 24, dans lequel le mécanisme de gestion de puissance détermine si le PD doit être alimenté au cours d'une condition prédéterminée en fonction des multiples informations de PD.

29. Système selon la revendication 20, dans lequel le dispositif d'alimentation électrique est configuré pour fournir de la puissance au PD sur une liaison Ethernet.

30. Système selon la revendication 20, dans lequel le dispositif d'alimentation électrique est configuré pour fournir de la puissance au PD sur une couche physique d'un réseau de communication incluant la liaison de communication et pour recevoir les multiples informations de PD sur une couche de liaison du réseau de communication au-dessus de la couche physique.

31. Système selon la revendication 30, dans lequel le dispositif d'alimentation électrique est configuré pour recevoir les multiples informations de PD en utilisant un protocole LLDP.

32. Système selon la revendication 20, dans lequel le dispositif d'alimentation électrique est configuré pour fournir de la puissance au PD et recevoir les multiples informations de PD sur une couche physique d'un réseau de communication.

33. Système selon la revendication 20, dans lequel le dispositif d'alimentation électrique est configuré pour recevoir des informations sur un niveau de puissance minimal nécessaire par le PD pour réaliser des tâches prédéfinies requises pour empêcher le PD d'être endommagé.

34. Système selon la revendication 20, dans lequel le dispositif d'alimentation électrique est configuré pour recevoir des informations du PD quant au fait de savoir si le fonctionnement du PD est critique pour une condition d'urgence.

35. Système selon la revendication 20, dans lequel le dispositif d'alimentation électrique est configuré pour recevoir du PD un tableau de niveaux de consommation électrique (206) afin d'estimer la consommation électrique du PD pour une période de temps prédéterminée.

36. Système selon la revendication 20, dans lequel le dispositif d'alimentation électrique est configuré pour recevoir des informations sur une connexion de couche physique du PD afin de déterminer quelle quantité de puissance est perdue en raison de la connexion de couche physique.

37. Système selon la revendication 20, dans lequel le dispositif d'alimentation électrique est configuré pour recevoir des informations du PD à la volée.

38. Système selon la revendication 20, dans lequel le dispositif d'alimentation électrique est prévu dans un concentrateur de réseau d'un réseau local ayant :
au moins une paire de noeuds de réseau, et
du câblage de communication pour connecter les noeuds de réseau au concentrateur de réseau afin de fournir des communications de données,
et de fournir de la puissance du dispositif d'alimentation électrique au PD,
au moins un noeud de réseau étant configuré pour stocker les multiples informations de PD représentant de multiples caractéristiques du PD.

39. Système selon la revendication 38, dans lequel le noeud de réseau est configuré pour transférer les multiples informations de PD au dispositif d'alimentation électrique lorsque le PD est connecté au dispositif d'alimentation électrique.

40. Système selon la revendication 38, dans lequel le dispositif d'alimentation électrique est configuré pour recevoir un paquet d'informations de PD représentant les multiples informations de PD.

41. Système selon la revendication 38, dans lequel le dispositif d'alimentation électrique est configuré pour fournir de la puissance au PD sur une couche physique du réseau et pour recevoir les multiples informations de PD sur une couche de liaison du réseau.

42. Système selon la revendication 38, dans lequel le dispositif d'alimentation électrique est configuré pour fournir de la puissance au PD et pour recevoir les multiples informations de PD sur une couche physique du réseau.

43. Système selon la revendication 38, dans lequel le concentrateur de réseau et les noeuds de réseau sont configurés dans un réseau Ethernet.

44. Procédé de gestion de puissance de multiples dispositifs alimentés fournis en puissance sur un réseau de communication de données, le procédé comprenant les étapes consistant à :
obtenir sur le réseau de communication de données de multiples informations de dispositif alimenté représentant de multiples caractéristiques des dispositifs alimentés, les informations de dispositif alimenté étant fournies par les multiples dispositifs alimentés ; et
attribuer de la puissance fournie sur le réseau de communication de données aux dispositifs alimentés en fonction des informations de dispositif alimenté obtenues.
